# EUROPEAN PATENT APPLICATION

(11) **EP 4 628 899 A1**
(43) Date of publication of application: **08.10.2025**
(21) Application number: 24213278.5
(22) Date of filing: 15.11.2024
(51) Int. Cl.: G01N 35/00, G01N 1/10

(54) **AUTOMATIC SAMPLING EQUIPMENT AND AUTOMATIC SAMPLING METHOD**

(30) Priority: 02.04.2024 TW 113112623
(71) Applicant: Marketech International Corp., Tapei City 115 (TW)
(72) Inventor: CHEN, Ping-Hsu, 407 Taichung City (TW); LU, Chien-Kuo, 300 Hsinchu City (TW)
(74) Representative: Berggren Oy

(57) **Abstract**

An automatic sampling equipment (100) includes a sampling bottle (140) and an automatic sampling module (120). The sampling bottle (140) includes a cap (142) and a bottle body (144). The automatic sampling module (120) is utilized to hold the sampling bottle (140) for sampling a chemical liquid. In addition, the automatic sampling module (120) includes a sampling bottle holder (210) and a cap rotating device (250). The sampling bottle holder (210) is utilized to hold the body of the sampling bottle (140), and the cap rotating device (250) is equipped above the sampling bottle holder (210) to open or close the cap (142) of the sampling bottle (140). Furthermore, an automatic sampling method is also disclosed herein.

## Description

### Technical Field

The present disclosure relates to an automatic sampling equipment and an automatic sampling method. More particularly, the present disclosure relates to an automatic chemical liquid sampling equipment and an automatic chemical liquid sampling method.

### Background

With the booming of the domestic and international semiconductor markets in recent years, due to the demand for computers and the peripheral products thereof, the semiconductor industry has continued to expand, and created a large amount of foreign exchange earnings.

The manufacturing processes of semiconductor components are very complicated, and the technologies involved cover almost all of the most important and critical technologies and inventions of modern scientific research. Therefore, the semiconductor industry is not only a cutting-edge technology industry, but also requires a lot of money to maintain high-end research.

Due to the increasingly complicated design of semiconductor components, the manufacturing technologies of semiconductor components are becoming more sophisticated and complex, and the potential occupational hazards and property losses are becoming more serious in semiconductor processes. Chemical liquids are commonly used in processes such as epitaxy, diffusion, ions implantation, chemical vapor deposition, etching and lithography.

In a semiconductor fabrication plant, chemical liquids are stored in chemical storage drums to connect to a supply line in the semiconductor fabrication plant. In the current semiconductor production system, more than 30 chemical liquids may be supplied to the production line at the same time. In order to ensure the quality and yield of component production, various chemical liquids must be tested regularly.

However, the sampling process of the chemical liquids is not only time-consuming, but the sampling process may also be contaminated. There is a need to improve the accuracy and efficiency of sampling process so as to improve the quality and productivity of semiconductor production.

### Summary

One objective of the embodiments of the present invention is to provide an automatic sampling equipment able to conveniently perform the chemical liquid sampling so as to improve the quality and productivity of semiconductor production.

To achieve these and other advantages and in accordance with the objective of the embodiments of the present invention, as the embodiment broadly describes herein, the embodiments of the present invention provides an automatic sampling equipment including a sampling bottle and an automatic sampling module. The sampling bottle including a cap and a bottle body. The automatic sampling module holds the sampling bottle for sampling a chemical liquid. In addition, the automatic sampling module includes a sampling bottle holder and a cap rotating device. The sampling bottle holder holds the bottle body of the sampling bottle and the cap rotating device is equipped above the sampling bottle holder to open or close the cap of the sampling bottle.

In some embodiments, the automatic sampling module further includes a rotating base connected to the sampling bottle holder to rotate the sampling bottle.

In some embodiments, the automatic sampling module further includes a vertical moving device connected to the cap rotating device to move the cap rotating device up and down.

In some embodiments, the automatic sampling module further includes a chemical liquid outlet pipeline moving device equipped between the sampling bottle holder and the cap rotating device to inject the chemical liquid into the sampling bottle.

In some embodiments, the chemical liquid outlet pipeline moving device includes an outlet pipeline fixing apparatus fixing a plurality of chemical liquid outlet pipelines.

In some embodiments, the chemical liquid outlet pipeline moving device further includes a horizontal moving apparatus connected to the outlet pipeline fixing apparatus to move the chemical liquid outlet pipeline to align with the sampling bottle.

In some embodiments, the chemical liquid outlet pipeline includes a first chemical liquid outlet pipeline and a second chemical liquid outlet pipeline. The second chemical liquid outlet pipeline is parallel with the first chemical liquid outlet pipeline to respectively provide different chemical liquids.

In some embodiments, the first chemical liquid outlet pipeline is configured to supply a hydrofluoric acid (HF) solution, a nitric acid solution, a phosphoric acid solution, an acetic acid solution, a hydrogen peroxide solution or a sulfuric acid solution, and the second chemical liquid outlet pipeline is configured to supply a deionized water (DI water).

In some embodiments, the automatic sampling equipment further includes a casing, a leakage plate and a drainage outlet. The casing supports and protects the automatic sampling module and the sampling bottle, the leakage plate is equipped inside the casing and the drainage outlet is equipped below the leakage plate to discharge the chemical liquid and the deionized water passing through the leakage plate out of the automatic sampling equipment.

In some embodiments, the automatic sampling module further includes a belt pulley transmission system connected to the cap rotating device to rotate the cap rotating device to open or close the cap of the sampling bottle.

According to another aspect of the present invention, there is provided an automatic sampling method including the following steps. First, a sampling bottle holder is utilized to fix a sampling bottle. A chemical liquid outlet pipeline moving device is utilized to move a plurality of chemical liquid outlet pipelines to align with the sampling bottle to fill the chemical liquid into the sampling bottle. A cleaning liquid from one of the chemical liquid outlet pipelines is utilized to clean the outer surface of the sampling bottle.

In some embodiments, the automatic sampling method further includes a step of utilizing a cap rotating device to open a cap of the sampling bottle.

In some embodiments, the automatic sampling method further includes a step of cleaning an internal storage space of the sampling bottle.

In some embodiments, the step of cleaning the internal storage space of the sampling bottle includes steps of filling the chemical liquid, closing the cap and utilizing a rotating base to shake the sampling bottle.

In some embodiments, the step of filling the chemical liquid includes a step of filling the chemical liquid into the sampling bottle about 30% volume of the sampling bottle.

In some embodiments, the step of utilizing the rotating base to shake the sampling bottle includes a step of utilizing the rotating base to shake the sampling bottle about 30 seconds.

In some embodiments, the step of cleaning the internal storage space of the sampling bottle further includes a step of opening the cap of the sampling bottle and a step of rotating the sampling bottle to drain the chemical liquid in the sampling bottle.

In some embodiments, the automatic sampling method further includes a step of repeatedly cleaning the internal storage space of the sampling bottle at three times.

In some embodiments, the step of utilizing the cleaning liquid from one of the chemical liquid outlet pipelines to clean the outer surface of the sampling bottle is to utilizing a deionized water to clean the outer surface of the sampling bottle.

In some embodiments, the automatic sampling method further includes steps of filling the chemical liquid into the sampling bottle about 80% volume of the sampling bottle and closing a cap of the sampling bottle before the step of utilizing the cleaning liquid from one of the chemical liquid outlet pipelines to clean the outer surface of the sampling bottle.

Hence, the automatic sampling equipment may safely and conveniently obtain samples of chemical liquids used in semiconductor production lines. The automatic sampling equipment may not only reduce the chance of contamination caused by human or environmental pollution, but also improves the sampling efficiency and accuracy, and further improve the yield and output of the semiconductor process, thereby increasing the revenue and profits of semiconductor production.

### Brief Description of the Drawings

The disclosure can be more fully understood by reading the following detailed description of the embodiment, with reference made to the accompanying drawings as follows:
Fig. 1 illustrates a schematic diagram showing an automatic sampling equipment according to one embodiment of the present invention;
Fig. 2 illustrates a partially enlarged schematic diagram of the automatic sampling equipment according to one embodiment of the present invention; and
Fig. 3 illustrates a schematic flow chart of an automatic sampling method with the automatic sampling equipment according to another embodiment of the present invention.

### Detailed Description of the Preferred Embodiment

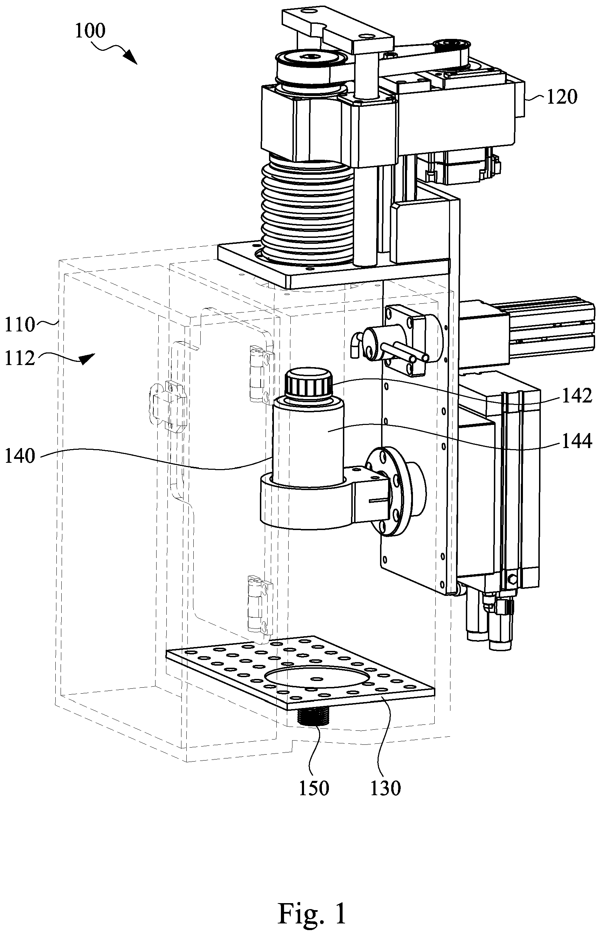

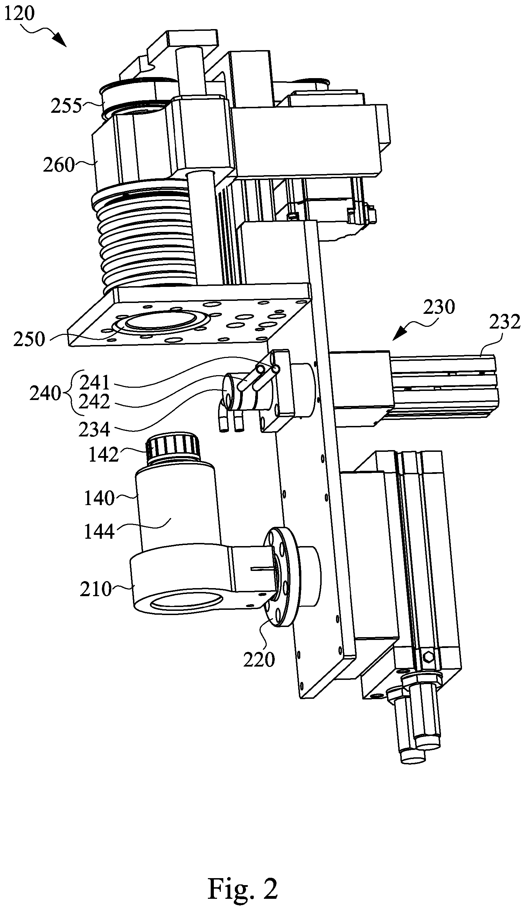

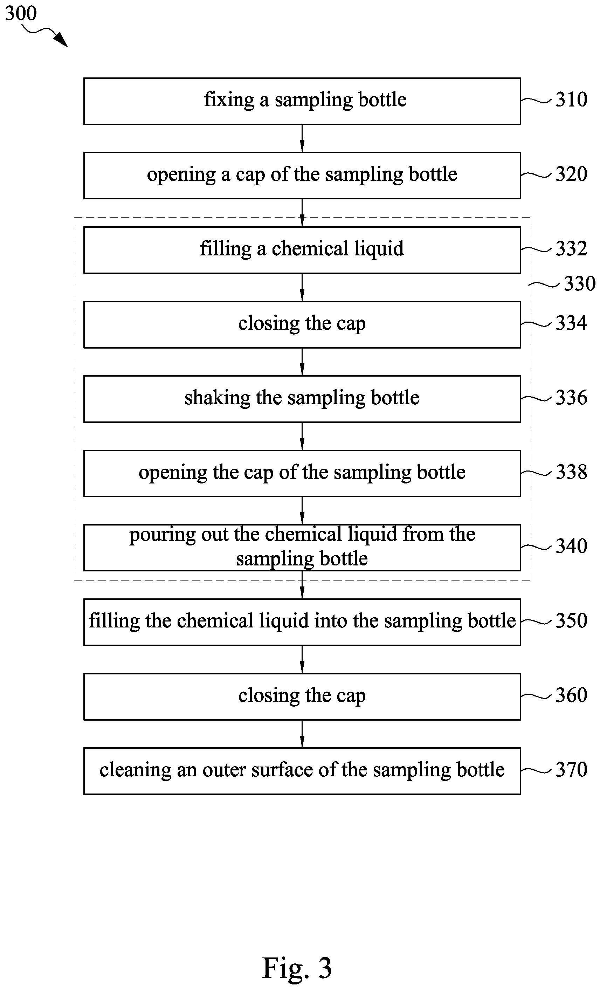

Fig. 1 is a schematic diagram showing an automatic sampling equipment according to one embodiment of the present invention, and Fig. 2 is a partially enlarged schematic diagram thereof. In addition, Fig. 3 is a schematic flow chart of the automatic sampling method using the automatic sampling equipment.

Simultaneously referring to Figs. 1 and 2, as shown in the drawings, the automatic sampling equipment 100 includes a sampling bottle 140 and an automatic sampling module 120. In addition, the sampling bottle 140 includes a cap 142 and a bottle body 144, and the automatic sampling module 120 is utilized to hold the sampling bottle 140 for sampling a chemical liquid.

In some embodiments, the automatic sampling module 120 includes a sampling bottle holder 210, a rotating base 220, a chemical liquid outlet pipeline moving device 230 and a cap rotating device 250.

The sampling bottle holder 210 is utilized to clamp the bottle body 144 of the sampling bottle 140, and the cap rotating device 250 is equipped above the sampling bottle holder 210 to open or close the cap 142 of the sampling bottle 140.

In addition, the rotating base 220 is connected to the sampling bottle holder 210 to rotate the sampling bottle 140, that is, rotate the sampling bottle 140 clockwise or counterclockwise at a predetermined angle, for example, 10 degrees, 20 degrees, 30 degrees, 45 degrees, 90 degrees, 120 degrees, 150 degrees, 180 degrees and/or 360 degrees.

In addition, the chemical liquid outlet pipeline moving device 230 is preferably equipped between the sampling bottle holder 210 and the cap rotating device 250 to inject the chemical liquid into the sampling bottle 140.

In addition, in some embodiments, the automatic sampling module 120 includes a vertical moving device 260 connected to the cap rotating device 250 to move the cap rotating device 250 up and down. Therefore, as opening the cap 142 of the sampling bottle 140, the vertical moving device 260 moves the cap rotating device 250 downward to couple to the cap 142, and then rotates the cap 142 to open the cap 142 of the sampling bottle 140. As closing the cap 142 of the sampling bottle 140, the vertical moving device 260 moves the cap rotating device 250 and the cap 142 held in the cap rotating device 250 downward and then rotates the cap 142 to fix the cap 142 on the sampling bottle 140, and the vertical moving device 260 subsequently moves the cap rotating device 250 upward to separate the cap rotating device 250 from the cap 142.

In some embodiments, the automatic sampling module 120 further includes a belt pulley transmission system 255 connected to the cap rotating device 250 to rotate the cap rotating device 250 so as to open or close the cap 142 of the sampling bottle 140. The cap rotating device 250 may be directly or indirectly driven by a direct current (DC) motor, an alternating current (AC) motor, a servo motor, a stepper motor or any other driving device.

In some embodiments, the chemical liquid outlet pipeline moving device 230 includes a horizontal moving apparatus 232 and an outlet pipeline fixing apparatus 234. The outlet pipeline fixing apparatus 234 is configured to fix a plurality of chemical liquid outlet pipelines 240, for example, a first chemical liquid outlet pipeline 241 and/or a second chemical liquid outlet pipeline 242 as shown in the drawing, or more than two chemical liquid outlet pipelines. The first chemical liquid outlet pipeline 241, the second chemical liquid outlet pipeline 242 and any other chemical liquid outlet pipeline are preferably arranged in parallel to supply various chemical liquids.

In some embodiments, the first chemical liquid outlet pipeline 241 is configured to supply a hydrofluoric acid (HF) solution, a nitric acid solution, a phosphoric acid solution, an acetic acid solution, a hydrogen peroxide solution and/or a sulfuric acid solution. In addition, the second chemical liquid outlet pipeline 242 is preferably configured to supply a deionized water (DI water) as a cleaning liquid.

The horizontal moving apparatus 232 is connected to the outlet pipeline fixing apparatus 234 to horizontally move the outlet pipeline fixing apparatus 234 and the chemical liquid outlet pipeline 240 to align the chemical liquid outlet pipeline 240 with the bottle mouth of the sampling bottle 140 to inject the chemical liquid into the sampling bottle 140.

In some embodiments, the automatic sampling equipment 100 further includes a casing 110, a leakage plate 130 and a drainage outlet 150. The casing 110 includes an opening 112, the automatic sampling module 120 is equipped in the opening 112, and a user may remove or insert the sampling bottle 140 via the opening 112. The casing 110 is utilized to support and protect the automatic sampling module 120 and the sampling bottle 140, and the casing 110 may also increase the safety capability during sampling.

In addition, the leakage plate 130 equipped inside the casing 110, and the drainage outlet 150 is equipped below the leakage plate 130 to discharge the chemical liquids passed through the leakage plate 130 out of the automatic sampling equipment 100 via the drainage outlet 150. In addition, the chemical liquids include the hydrofluoric acid solution and the deionized water.

According to another aspect of the present invention, an automatic sampling method includes the following steps. Simultaneously referring to Figs. 1 to 3, in step 310, a sampling bottle 140 is fixed, for example, the sampling bottle 140 is fixed by the sampling bottle holder 210 as shown in Figs. 1 and 2.

Subsequently, in step 320, a cap rotating device 250 is utilized to open the cap 142 of the sampling bottle 140.

In step 330, the internal storage space of the sampling bottle 140 is cleaned to avoid contamination of the internal storage space of the sampling bottle 140 and improve the accuracy of the sampling data. In some embodiments, the step 330 of cleaning the internal storage space of the sampling bottle 140 may further includes the following steps. In step 332, a chemical liquid is filled. In some embodiments, the chemical liquid outlet pipeline moving device 230 is utilized to move the chemical liquid outlet pipelines 240 to allow the chemical liquid outlet pipelines 240 aligning with the bottle mouth of the sampling bottle 140 to inject a chemical liquid into the sampling bottle 140. In some embodiments, while cleaning the sampling bottle 140, the chemical liquid is filled into the sampling bottle 140 about 30% of volume of the sampling bottle 140 to clean the internal storage space of the sampling bottle 140 with the chemical liquid.

In some embodiments, the step 330 of cleaning the internal storage space of the sampling bottle 140 may further include the following steps. In step 334, the cap 142 is closed. In addition, in step 336, the sampling bottle 140 is shaken by the rotating base 220. In some embodiments, the step 336 of shaking the sampling bottle 140 with the rotating base 220 at an angle of 10 degrees, 30 degrees, 45 degrees, 60 degrees, 90 degrees, 180 degrees and/or 360 degrees for about 10 to 30 seconds or above, and the rotating base 220 repeatedly rotates the sampling bottle 140 to clean the internal storage space of the sampling bottle 140 with the chemical liquid.

In some embodiments, the step 330 of cleaning the internal storage space of the sampling bottle 140 may further includes a step 338 of opening the cap 142 of the sampling bottle 140, and a step 340 of rotating the sampling bottle 140 to pour out the chemical liquid from the sampling bottle 140. In addition, the chemical liquid passing through the openings of the leakage plate 130 may be discharged from the automatic sampling equipment 100 through the drainage outlet 150.

In some embodiments, the step 330 of cleaning the internal storage space of the sampling bottle 140 may be repeated more than two times, and preferably more than three times.

After cleaning the internal storage space of the sampling bottle 140, in step 350, the chemical liquid outlet pipeline moving device 230 is utilized again to move the plurality of chemical liquid outlet pipelines 240 to align with the sampling bottle 140 to inject the chemical liquid into the sampling bottle 140 to sample the chemical liquid, and the chemical liquid is preferably filled into the sampling bottle 140 about 80% volume of the sampling bottle 140. The sampling bottle 140 may be filled with an appropriate volume of the chemical liquid according to the sampling requirement.

Subsequently, in step 360, the cap 142 is closed. In addition, in step 370, the outer surface of the sampling bottle 140 is cleaned. Preferably, the outer surface of the sampling bottle 140 is cleaned by the deionized water as a cleaning liquid supplied from the second chemical liquid outlet pipeline 242 so as to effectively prevent the outer surface of the sampling bottle 140 from being contaminated.

Accordingly, the automatic sampling equipment may safely and conveniently obtain samples of chemical liquids used in semiconductor production lines. The automatic sampling equipment may not only reduce the chance of contamination caused by human or environmental pollution, but also improves the sampling efficiency and accuracy, and further improve the yield and output of the semiconductor process, thereby increasing the revenue and profits of semiconductor production.

## Claims

1. An automatic sampling equipment (100), **characterized by** comprising:
a sampling bottle (140) comprising a cap (142) and a bottle body (144); and
an automatic sampling module (120) to hold the sampling bottle (140) for sampling a chemical liquid, wherein the automatic sampling module (120) comprises:
a sampling bottle holder (210) to hold the bottle body (144) of the sampling bottle (140); and
a cap rotating device (250) equipped above the sampling bottle holder (210) to open or close the cap (142) of the sampling bottle (140).

2. The automatic sampling equipment (100) of claim 1, wherein the automatic sampling module (120) further comprises:
a rotating base (220) connected to the sampling bottle holder (210) to rotate the sampling bottle (140).

3. The automatic sampling equipment (100) of any one of claims 1-2, wherein the automatic sampling module (120) further comprises:
a vertical moving device (260) connected to the cap rotating device (250) to move the cap rotating device (250) up and down.

4. The automatic sampling equipment (100) of any one of claims 1-3, wherein the automatic sampling module (120) further comprises:
a chemical liquid outlet pipeline moving device (230) equipped between the sampling bottle holder (210) and the cap rotating device (250) to inject the chemical liquid into the sampling bottle (140).

5. The automatic sampling equipment (100) of claim 4, wherein the chemical liquid outlet pipeline moving device (230) comprises:
an outlet pipeline fixing apparatus (234) fixing a plurality of chemical liquid outlet pipelines (240).

6. The automatic sampling equipment (100) of claim 5, wherein the chemical liquid outlet pipeline moving device (230) further comprises:
a horizontal moving apparatus (232) connected to the outlet pipeline fixing apparatus (234) to move the chemical liquid outlet pipeline (240) to align with the sampling bottle (140).

7. The automatic sampling equipment (100) of claim 6, wherein the chemical liquid outlet pipeline (240) comprises:
a first chemical liquid outlet pipeline (241); and
a second chemical liquid outlet pipeline (242) parallel with the first chemical liquid outlet pipeline (241) to respectively provide different chemical liquids.

8. The automatic sampling equipment (100) of claim 7, wherein the first chemical liquid outlet pipeline (241) is configured to supply a hydrofluoric acid (HF) solution, a nitric acid solution, a phosphoric acid solution, an acetic acid solution, a hydrogen peroxide solution or a sulfuric acid solution, and the second chemical liquid outlet pipeline is configured to supply a deionized water (DI water).

9. The automatic sampling equipment (100) of claim 8, further comprising:
a casing (110) to support and protect the automatic sampling module (120) and the sampling bottle (140);
a leakage plate (130) equipped inside the casing (110); and
a drainage outlet equipped below the leakage plate (130) to discharge the chemical liquid and the deionized water passing through the leakage plate (130) out of the automatic sampling equipment (100).

10. The automatic sampling equipment (100) of any one of claims 1-9, wherein the automatic sampling module (120) further comprises:
a belt pulley transmission system (255) connected to the cap rotating device (250) to rotate the cap rotating device (250) to open or close the cap (142) of the sampling bottle (140).

11. An automatic sampling method, **characterized by** comprising:
utilizing a sampling bottle holder (210) to fix a sampling bottle (140);
utilizing a chemical liquid outlet pipeline moving device (230) to move a plurality of chemical liquid outlet pipelines (240) to align with the sampling bottle (140) to fill the chemical liquid into the sampling bottle (140); and
utilizing a cleaning liquid from one of the chemical liquid outlet pipelines (240) to clean an outer surface of the sampling bottle (140).

12. The automatic sampling method of claim 11, further comprising:
utilizing a cap rotating device (250) to open a cap (142) of the sampling bottle (140);
cleaning an internal storage space of the sampling bottle (140), wherein the step of cleaning the internal storage space of the sampling bottle (140) comprises:
filling the chemical liquid;
closing the cap (142); and
utilizing a rotating base (220) to shake the sampling bottle (140),
wherein the step of filling the chemical liquid comprises:
filling the chemical liquid into the sampling bottle (140) about 30% volume of the sampling bottle (140),
wherein the step of utilizing the rotating base (220) to shake the sampling bottle (140) comprises:
utilizing the rotating base (220) to shake the sampling bottle (140) about 30 seconds,
wherein the step of cleaning the internal storage space of the sampling bottle (140) further comprises:
opening the cap (142) of the sampling bottle (140); and
rotating the sampling bottle (140) to drain the chemical liquid in the sampling bottle (140).

13. The automatic sampling method of claim 12, further comprising:
repeatedly cleaning the internal storage space of the sampling bottle (140) at least three times.

14. The automatic sampling method of any one of claims 11-13, wherein the step of utilizing the cleaning liquid from one of the chemical liquid outlet pipelines (240) to clean the outer surface of the sampling bottle (140) is to utilizing a deionized water to clean the outer surface of the sampling bottle (140).

15. The automatic sampling method of any one of claims 11-14, wherein before the step of utilizing the cleaning liquid from one of the chemical liquid outlet pipelines (240) to clean the outer surface of the sampling bottle (140), the automatic sampling method further comprises:
filling the chemical liquid into the sampling bottle (140) about 80% volume of the sampling bottle (140); and
closing a cap (142) of the sampling bottle (140).
